Europäisches Patentamt

European Patent Office

Office européen des brevets

(11) Publication number: 0 516 289 A2

# EUROPEAN PATENT APPLICATION

(21) Application number: 92303901.0

(22) Date of filing: 30.04.92

(51) Int. Cl.⁵: G06F 3/023

(30) Priority: 28.05.91 US 706491

(43) Date of publication of application:
02.12.92 Bulletin 92/49

(84) Designated Contracting States:
DE FR GB

(71) Applicant: International Business Machines
Corporation
Old Orchard Road
Armonk, N.Y. 10504(US)

(72) Inventor: Bealkowski, Richard
1401 Hummingbird Drive
Delray Beach, Florida 33444(US)
Inventor: Blackledge, John Wiley Jr.
304 Sequoia Lane
Boca Raton, Florida 33487(US)
Inventor: Gulley, Jackie Wayland
4426 Brandon Drive
Delray Beach, Florida 33445-2233(US)

(74) Representative: Blakemore, Frederick Norman
IBM United Kingdom Limited Intellectual
Property Department Hursley Park
Winchester Hampshire SO21 2JN(GB)

(54) Computer system and method of operating the computer system.

(57) This invention relates to personal computers and more particularly to a personal computer in which keyboard control is compatible with prior IBM personal computers and facilitates use with application program software written for IBM compatible computers. The personal computer has a local processor bus; and a microprocessor, volatile memory, a memory controller and a bus controller coupled to the local processor bus; volatile memory coupled to the local processor bus. The bus controller provides communications between the local processor bus and a slower speed input/output bus. A keyboard controller has an output port register coupled to the bus controller and memory controller for providing communications between a manually operated keyboard for data entry and the input/output bus. A controlling data word is stored in the register for defining the characteristics of signals emitted from the port, and a mask value for the controlling data word is stored in the computer system for defining any portions of the controlling data word which may be varied in accommodating varied operation as may be required for the operation of varied application program software. The keyboard controller and computer system cooperate for reading the controlling data word and mask value and any modifying data word directed to the output port register by any application program software and for writing to the output port register a new controlling data word modified only in those portions defined as variable by the mask value.

This invention relates to computer systems and more particularly to personal computers in which compatibility of keyboard control is facilitated.

Personal computer systems in general and IBM personal computers in particular have attained widespread use for providing computer power to many segments of today's modern society. Personal computer systems can usually be defined as a desk top, floor standing, or portable microcomputer that consists of a system unit having a single system processor and associated volatile and non-volatile memory, a display monitor, a keyboard, one or more diskette drives, a fixed disk storage, and an optional printer or plotter. One of the distinguishing characteristics of these systems is the use of a motherboard or system planar to electrically connect these components together. These systems are designed primarily to give independent computing power to a single user and are inexpensively priced for purchase by individuals or small businesses. Examples of such personal computer systems are IBM's PERSONAL COMPUTER AT and IBM's PERSONAL SYSTEM/2 Models 25, 30, L40SX, 50, 55, 65, 70, 80, 90 and 95.

These systems can be classified into two general families. The first family, usually referred to as Family I Models, 95. Early Family I models (exemplified by the Personal Computer or PC and Personal Computer/Extended Technology or PC/XT models) typically used the popular INTEL 8088 or 8086 microprocessor as the system processor. These processors have the ability to address one megabyte of memory. Later Family I and all Family II models (exemplified by the PC/AT and the PS/2 models listed above) typically use a high speed INTEL 80286, 80386, or 80486 microprocessor which can operate in a real mode to emulate the slower speed INTEL 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

The IBM Personal Computer AT (PC/AT) used a microcontroller (an Intel 8042) to interface to the keyboard. One of the design choices made on the PC/AT was to allow one of the 8042 output pins control over the input/output (also known as the AT or Industry Standard Architecture or ISA) bus A20 address line. Control of the A20 address line was deemed necessary for compatibility with systems that had a one megabyte address space. The PC/AT had a 16 megabyte address space. The compatibility point was that physical addresses at the one megabyte boundary would "wrap back" through location 0, as on the IBM Personal Computer and IBM Personal Computer XT (PC/XT). For advanced function, control of the A20 line could be given back to the processor.

The 8042 A20 connection is one of eight output pins on the "P2" port of the 8042. Those applications which required altering the state of the A20 line would issue a "write output port" command to the 8042 followed by a data word. The data word was the eight-bit value to be written to the port. The preferred method of altering a bit in the 8042 output port is to read the port, alter the desired bit or bits, and write the value back. However, some application program software (herein also known as "applications") took a short-cut and assumed the state of output port bits, set their own bit values accordingly, and wrote out the value. This assumption was harmless enough until the output port bit definition changed with the introduction of the IBM Personal System/2 (PS/2) models.

The PS/2 models expanded the use of the output port pins to support new functions. One of the new functions was the ability to support a mouse. In addition, the PS/2 models provided a new way to alter the A20 line without going through the 8042. As application program software was ported to operate on PS/2 models, such applications took advantage of the new PS/2 A20 control method.

Applications now assumed that Micro Channel systems have the new PS/2 A20 mechanism and that PC/AT style machines only have the prior 8042 mechanism. As a consequence, systems which utilize both a PS/2 8042 keyboard controller and a PC/AT input/output bus can encounter compatibility problems. Certain applications make assumptions about the actual electrical connections made on the 8042. These assumptions can be false and cause certain applications to fail. The problem arises on systems which use the PC/AT bus (not Micro Channel) but incorporate the added function of the PS/2 8042. Applications sense that they are on a PC/AT style machine and use data values which were not detrimental on the PC/AT 8042 but cause significant problems on the PS/2 style 8042. Applications which "hard code" values to the PS/2 8042 thinking they are on a PC/AT will fail.

According to the present invention there is provided a computer system comprising: a local processor bus; a microprocessor directly coupled to said local processor bus; volatile memory directly coupled to said local processor bus for receiving, storing and permitting reading of data written to, stored by, and read from said memory; a memory controller directly coupled to said local processor bus and to said volatile memory for signalling physical addresses in said volatile memory for the writing, storage and reading of data; a bus controller directly coupled to said local processor bus for providing communications between said local processor bus and a slower speed input/output bus; a keyboard controller having an output port register coupled to said bus controller and said memory controller for providing communications between a manually operated keyboard for data entry and said input/output bus; means to cause said output port register to supply a controlling data word for defining the characteristics of signals emitted to said bus controller and said memory controller and thereby controlling the interaction of said computer system with application program software; and means to store a mask value for said controlling data word in said computer system for defining portions of said controlling data word which may be varied in accommodating varied, said keyboard controller and said computer system being arranged to cooperate in reading said controlling data word and said mask value and to modify the controlling data word those portions defined as variable by said mask value in response to application program software.

Further according to the present invention there is provided a method of operating a computer system which enhances compatibility with varied application program software, the method comprising the steps of: reading a controlling data word stored in the register of a keyboard controller for defining the characteristics of signals emitted from an output port of the controller to a bus controller and a memory controller and thereby controlling the interaction of the computer system with application program software; reading a mask value for the controlling data word stored in the computer system for defining any portions of the controlling data word which may be varied in accommodating varied operation as may be required for the operation of varied application program software; reading a modifying data word directed to the register by application program software to be used on the computer system; and writing to the register a new controlling data word modified only in those portions defined as variable by said mask value.

In the drawings:-
Figure 1 is a perspective view of a personal computer embodying this invention;
Figure 2 is an exploded perspective view of certain elements of the personal computer of Figure 1 including a chassis, a cover, and a planar board and illustrating certain relationships among those elements;
Figure 3 is a schematic view of certain components of the personal computer of Figures 1 and 2; and
Figure 4 is a schematic representation of certain steps in the operation of the computer of Figures 1 through 3.

Detailed Description of Invention

While the present invention will be described more fully hereinafter with reference to the accompanying drawings, in which a preferred embodiment of the present invention is shown, it is to be understood at the outset of the description which follows that persons of skill in the appropriate arts may modify the invention here described while still achieving the favourable results of this invention. Accordingly, the description which follows is to be understood as being a broad, teaching disclosure directed to persons of skill in the appropriate arts, and not as limiting upon the present invention.

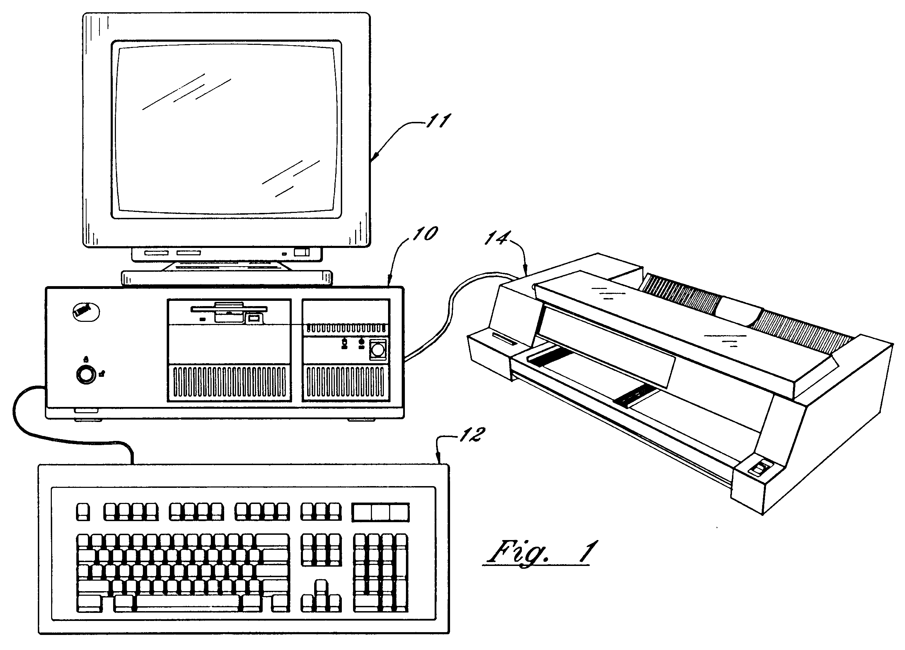

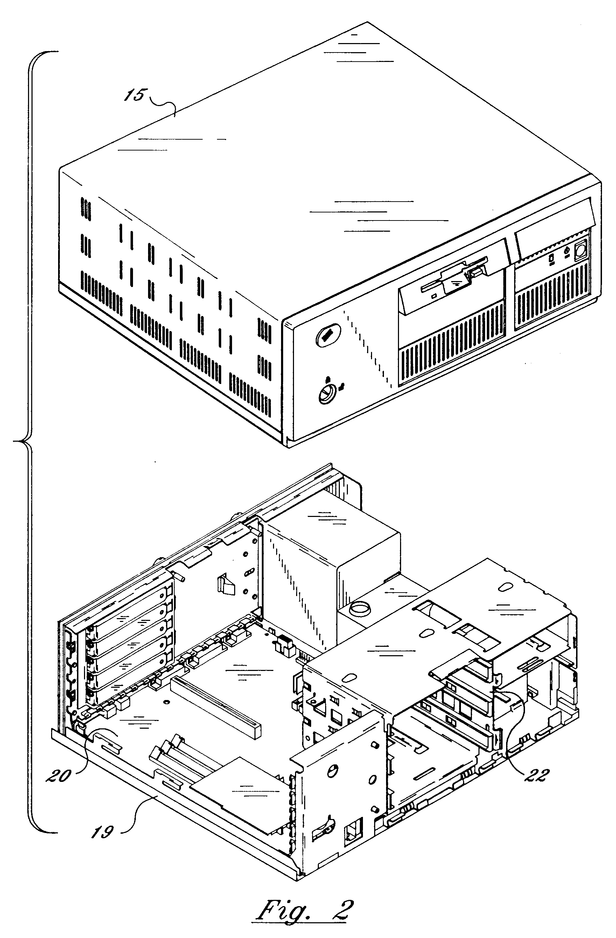

Referring now more particularly to the accompanying drawings, a microcomputer embodying the present invention is there shown and generally indicated at 10 (Figure 1). As mentioned hereinabove, the computer 10 may have an associated monitor 11, keyboard 12 and printer or plotter 14. The computer 10 has a cover 15 (Figure 2) which cooperates with a chassis 19 in defining an enclosed, shielded volume for receiving electrically powered data processing and storage components for processing and storing digital data. At least certain of these components are mounted on a multilayer planar 20 or motherboard which is mounted on the chassis 19 and provides a means for electrically interconnecting the components of the computer 10 including those identified above and such other associated elements as floppy disk drives, various forms of direct access storage devices, accessory cards or boards, and the like. The chassis 19 has a base, a front panel, and a rear panel. The front panel defines at least one open bay 22 for receiving a data storage device such as a disk drive for magnetic or optical disks, a tape backup drive, or the like.

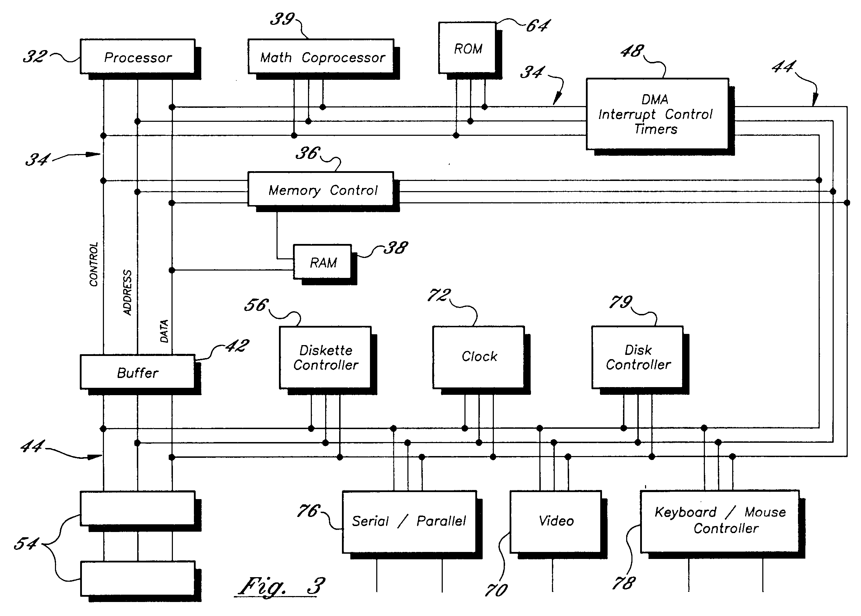

Prior to relating the above structure to the present invention, a summary of the operation in general of the personal computer system 10 may merit review. Referring to Figure 3, there is shown a block diagram of a personal computer system illustrating the various components of the computer system such as the system 10 in accordance with the present invention, including components mounted on the planar 20 and the connection of the planar to the I/O slots and other hardware of the personal computer system. Connected to the planar is the system processor 32 comprised of a microprocessor which is connected by a high speed CPU local bus 34 to a memory control unit 36 which is further connected to a volatile random access memory (RAM) 38. While any appropriate microprocessor can be used, one suitable microprocessor is the 80386SX which is sold by Intel. The memory controller 36 includes the logic for mapping addresses to and from the microprocessor 32 to particular areas of RAM 38.

While the present invention is described hereinafter with particular reference to the system block diagram of Figure 3, it is to be understood at the outset of the description which follows that it is contemplated that the apparatus and methods in accordance with the present invention may be used with other hardware configurations of the planar board. For example, the system processor could be an Intel 80286 or 80486 microprocessor.

Returning now to Figure 3, the CPU local bus 34 (comprising data, address and control components) provides for the connection of the microprocessor 32 and a math coprocessor 39. Also coupled on the CPU local bus 34 is a buffer 42. The buffer 42 is itself connected to a slower speed (compared to the CPU local bus) system bus 44, also comprising address, data and control components. The system bus 44 is also known as the input/output or AT or ISA bus and is connected to a DMA unit 48. The DMA unit 48 is comprised of a central arbitration unit and a DMA controller and functions as a bus controller. The buffer 42 provides an interface between the local bus 34 and the input/output bus 44. Also connected to the input/output bus 44 are a plurality of I/O slots 54 for receiving adapter cards which may be further connected to an I/O device or memory.

The DMA unit 48 is also connected to the I/O slots 54 and a diskette controller 56. Coupled along input/output bus 44 are a variety of I/O adapters and other components such as a video adapter 70 (which is used to drive the monitor 11), a CMOS clock 72, a serial/parallel adapter 76, a keyboard/mouse controller 78, and a disk controller 79. The keyboard/mouse controller has an output port P2 previously described (normally integral with the 8042 microcontroller mentioned above) in which is stored a controlling data word for defining the characteristics of signals emitted from the output port to the bus controller 48 and memory controller 36 and thereby controlling the interaction of the computer system 10 with application program software.

In order to adapt the personal computer system 10 to the use of a wide range of applications, the write output port command (the D1 command) addressed to an 8042 microcontroller included in the keyboard/mouse controller 78 has been enhanced to include the use of a special mask value in accordance with this invention. This special mask value is an eight-bit data word called D1MASK. Each bit position in D1MASK corresponds directly to the bit positions in the controlling data word stored in the 8042 output port register. The mask value D1MASK can be stored in internal 8042 memory or elsewhere in the computer system. The mask value D1MASK can be written or read by the system through the 8042 "write memory" or "read memory" commands, respectively. In a preferred mode for the present invention, when a bit position in D1MASK is a one then the corresponding bit position in the output port is allowed to be changed. When a bit position in D1MASK is a zero then the corresponding bit position in the output port is not allowed to be changed by the D1 command. It should be noted that the D1MASK bit definition can be inverted in implementation as well. That is, zeros to indicate positions that may change and ones to indicate which positions may not change. Only minor adaptations of the method are required if inverted D1MASK values are chosen.

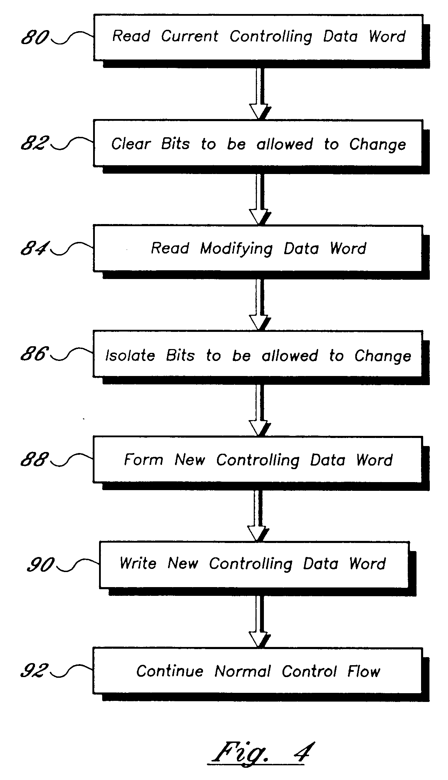

Referring now to Figure 4, the control flow for the enhanced 8042 D1 command is shown. The current controlling data word is read and placed into a register "A" (step 80). Next, the bit positions which are allowed to be changed as defined by D1MASK are cleared (step 82). One method to clear the bits which are allowed to change is to perform a logical OR of "A" with D1MASK and then exclusive OR (XOR) that resulting value with D1MASK. This intermediate value will be called "R2." Next the user data byte value part of the D1 command (called DBB, or modifying data word and derived from the application in question) is read into "A" (step 84). Only those bits which are allowed to change as defined by the D1MASK will be used from the DBB value. A logical AND operation is performed on the DBB value (stored in "A") with the D1MASK value resulting in a new "A" value, isolating the bits allowed to change (step 86). The new output port value is the logical OR of the R2 and "A" intermediate calculations. This new calculated value is stored in "A" (step 88). The data value in "A" is then written out to the output port register (step 90). The control flow then continues (step 92). As a point of reference, the original PC/AT 8042 D1 command consisted of steps 84, then 90, then 92.

To summarize, the method of Figure 4 can be represented by the following formula:

P2 = ((P2 OR D1MASK) XOR D1MASK) OR (DBB AND D1MASK)

For example, it is determined that only bit position one of the output port will be allowed to change. Recall that the bit positions within a byte are numbered 7 to 0, seven being the high-order and 0 being the low order. So D1MASK, the mask value as herein identified, would be 00000010 binary. The output port P2 is read and found to be 11001000 binary, the controlling data word as herein identified. The logical OR of the P2 value and D1MASK is 11001010 binary. The exclusive OR of 11001010 binary and 00000010 binary yields the R2 value of 11001000 binary. The DBB value is 10101010 binary. The logical AND of DBB and D1MASK yields an "A" value of 00000010 binary. The logical OR of "A" and R2 yields an "A" value of 11001010 binary. It is this "A" value that is output to the 8042 output port, as what is herein identified as the new controlling data word.

Generally, there are two sets of applications which create the conflicting requirements resolved by this invention. One set of applications require that the old style of D1 data values continue to operate as expected. The other set of applications require complete control over each bit in the output port. The D1MASK method allows the characteristics of the D1 command to be tailored to the specific application environment, enabling the entire application set to continue to operate with only an initial environment setting. The environment could be set from a utility which could be specified in the AUTOEXEC.BAT file or in the CONFIG.SYS file. Of course, the D1MASK setting could be saved in nonvolatile system memory and retrieved by a Power-On Self Test (POST) and programmed into the 8042. The 8042 itself could initialize the D1MASK value. The 8042 could default to a predetermined D1MASK value or could use an indicator, such as the state of certain pins on its input port, to select a D1MASK value. There are a number of unused pins on the 8042 input port which could provide this function. However D1MASK is set, it provides the maximum flexibility to solve the 8042 D1 command (write output port) problem.

**Claims**

1. A computer system comprising:

   a local processor bus;

   a microprocessor directly coupled to said local processor bus;

   volatile memory directly coupled to said local processor bus for receiving, storing and permitting reading of data written to, stored by, and read from said memory;

   a memory controller directly coupled to said local processor bus and to said volatile memory for signalling physical addresses in said volatile memory for the writing, storage and reading of data;

   a bus controller directly coupled to said local processor bus for providing communications between said local processor bus and a slower speed input/output bus;

   a keyboard controller having an output port register coupled to said bus controller and said memory controller for providing communications between a manually operated keyboard for data entry and said input/output bus;

   means to cause said output port register to supply a controlling data word for defining the characteristics of signals emitted to said bus controller and said memory controller and thereby controlling the interaction of said computer system with application program software; and

   means to store a mask value for said controlling data word in said computer system for defining portions of said controlling data word which may be varied in accommodating varied,

   said keyboard controller and said computer system being arranged to cooperate in reading said controlling data word and said mask value and to modify the controlling data word those portions defined as variable by said mask value in response to application program software.

2. A computer system according to Claim 1 wherein said mask value is stored in said keyboard controller.

3. A computer system according to Claim 1 further comprising non-volatile memory directly coupled to said local processor bus and further wherein said mask value is stored in said non-volatile memory.

4. A method of operating a computer system which enhances compatibility with varied application program software, the method comprising the steps of:

   reading a controlling data word stored in the register of a keyboard controller for defining the characteristics of signals emitted from an output port of the controller to a bus controller and a memory controller and thereby controlling the interaction of the computer system with application program software;

   reading a mask value for the controlling data word stored in the computer system for defining any portions of the controlling data word which may be varied in accommodating varied operation as may be required for the operation of varied application program software;

   reading a modifying data word directed to the register by application program software to be used on the computer system; and

writing to the register a new controlling data word modified only in those portions defined as variable by said mask value.

5. A method according to Claim 4 wherein the step of reading a mask value comprises reading the mask value from storage within the keyboard controller.

6. A method according to Claim 4 wherein the step of reading a mask value comprises reading the mask value from storage in non-volatile storage coupled to the keyboard controller.

7. A method according to Claim 4 further comprising the steps of clearing from the controlling data word those bits that are allowed to change in accordance with the mask value; identifying those bits of the modifying data word which correspond to cleared bits; and supplying the identified bit values to replace the cleared bits.

*Fig. 1*

*Fig. 2*

_Fig. 3_

80 — Read Current Controlling Data Word

82 — Clear Bits to be allowed to Change

84 — Read Modifying Data Word

86 — Isolate Bits to be allowed to Change

88 — Form New Controlling Data Word

90 — Write New Controlling Data Word

92 — Continue Normal Control Flow

*Fig. 4*